# EUROPÄISCHE PATENTANMELDUNG

(11) **EP 4 434 315 A1**
(43) Veröffentlichungstag der Anmeldung: **25.09.2024**
(21) Anmeldenummer: 24152196.2
(22) Anmeldetag: 16.01.2024
(51) Int. Cl.: A01B 79/00, A01D 78/10, A01D 43/08

(54) **LANDWIRTSCHAFTLICHES FAHRZEUGGESPANN ZUM MÄHEN VON FUTTERERNTEGUT**

(30) Priorität: 01.03.2023 DE 102023105019
(71) Anmelder: CLAAS Saulgau GmbH, 88340 Bad Saulgau (DE)
(72) Erfinder: Mümken, Philipp, 88400 Biberach an der Riß (DE); Fischer, Josef, 88400 Biberach (DE); Reinhardt, Martin, 88367 Hohentengen (DE); Schmid, Christian, 88696 Owingen (DE); Rupp, Magnus, 73494 Rosenberg (DE); Pflanze, Sascha, 88348 Bad Saulgau (DE); Mock, Andreas, 88284 Wolpertswende (DE); Ober, Martin, 78736 Trichtingen (DE); Oldenburg, Joachim, 33428 Harsewinkel (DE); Fugunt, Michael, 88410 Bad Wurzach (DE); Thiesmann, Waldemar, 49080 Osnabrück (DE); Becker, Michael, 88367 Hohentengen (DE); Monkenbusch, Robin, 33378 Rheda-Wiedenbrück (DE)
(74) Vertreter: Budach, Steffen

(57) **Zusammenfassung**

Die vorliegende Erfindung betrifft ein landwirtschaftliches Fahrzeuggespann (1) zum Mähen und Schwaden von Futtererntegut (7) während eines Futterernteprozesses.

Die vorliegende Erfindung beruht auf dem allgemeinen Gedanken, dass das landwirtschaftliche Fahrzeuggespann (1) wenigstens eine Einstellvorrichtung (15) aufweist, die dazu vorgesehen und eingerichtet ist, den Traktor (2) und die Mähwerkvorrichtung (3) in Abhängigkeit sensorbasierter Daten des landwirtschaftlichen Fahrzeuggespanns (1) zum Mähen und Schwaden des Futterernteguts (7) und Futterernteprozessdaten eines weiteren landwirtschaftliches Fahrzeuggespanns (50, 53, 54) des Futterernteprozesses einzustellen, um einen Energiegehalt, insbesondere einen Rohaschegehalt und/oder einen Trockenmassegehalt und/oder einen Rohfasergehalt, des abgemähten Ernteguts (6) für den Futterernteprozess zu optimieren.

## Beschreibung

Die vorliegende Erfindung betrifft ein landwirtschaftliches Fahrzeuggespann zum Mähen und Schwaden von Futtererntegut während eines Futterernteprozesses.

Dieser Futterernteprozess umfasst das Mähen des Futtererntegutes, das Wenden des abgemähten Futtererntegutes, das Schwaden des abgemähten Futtererntegutes, das Ernten des geschwadeten Futtererntegutes, das Verdichten und/oder das Lagern des geernteten Futterernteguts.

Die DE 10 2020 119 957 A1 betrifft ein Steuerungssystem für ein landwirtschaftliches Zuggespann bestehend aus einem Zugfahrzeug und einem Mähwerk, mit einem ersten Neigungssensor, der am Mähwerk montierbar ist und einen ersten Neigungswinkel erfasst, und mit einem zweiten Neigungssensor, der am Zugfahrzeug montierbar ist und einen zweiten Neigungswinkel erfasst, mit einem Steuergerät, das den ersten Neigungswinkel vom ersten Neigungssensor und den zweiten Neigungswinkel vom zweiten Neigungssensor empfängt und abhängig von einer Ist-Winkeldifferenz zwischen dem ersten Neigungswinkel und dem zweiten Neigungswinkel eine Ist-Schnitthöhe des Mähwerks ermittelt. Hierdurch kann zwar einfach und zuverlässig die Ist-Schnitthöhe erfasst und angepasst wird, wenn das Zuggespann an einer Steigung oder einem Gefälle betrieben wird, jedoch bezieht sich diese Anpassung lediglich auf die lokale Neigung des landwirtschlichen Feldes, sodass diese lokal optimale Schnitthöhenanpassung im Lichte des vollständigen Futterernteprozesses, der deutlich komplexer ist und mehr Arbeitsschritte als die Schnitthöhenanpassung währenddes Mähens des Futterernteguts umfasst, trotzdem nachteilig für das Futtererntegut sein kann und daher keine gewünschte Erntequalität des Futterernteguts sichergestellt wird.

Es ist deshalb Aufgabe der Erfindung, ein landwirtschaftliches Fahrzeuggespann zum Mähen und Schwaden von Futtererntegut vorzuschlagen, welches die komplexen Zusammenhänge eines Futterernteprozesses besser berücksichtigt und sicherstellt, dass ein qualitativ hochwertiges, für die Einlagerung geeignetes und einen hohen Energiegehalt aufweisendes Erntegut erzeugt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass das landwirtschaftliche Fahrzeuggespann wenigstens eine Einstellvorrichtung aufweist, die dazu vorgesehen und eingerichtet ist, den Traktor, die Mähwerkvorrichtung und die der Mähwerkvorrichtung zugeordnete Querfördereinrichtung in Abhängigkeit sensorbasierter Daten des landwirtschaftlichen Fahrzeuggespanns zum Mähen des Futterernteguts und Futterernteprozessdaten eines weiteren landwirtschaftliches Fahrzeuggespanns des Futterernteprozesses einzustellen, um einen Energiegehalt, insbesondere einen Rohaschegehalt und/oder einen Trockenmassegehalt und/oder einen Rohfasergehalt, des abgemähten Ernteguts für den Futterernteprozess zu optimieren. Das landwirtschaftliche Fahrzeuggespann zum Mähen des Futterernteguts weist den Traktor und wenigstens eine an den Traktor gekoppelte Mähwerkvorrichtung und dieser jeweils zugeordneten Querfördereinrichtung zum Mähen des Futterernteguts auf. Dieses landwirtschaftliche Fahrzeuggespann hat den Vorteil, dass einer Futterverschmutzung des Futterernteguts entgegengewirkt wird, da der Rohaschegehalt und Rohfasergehalt im Futtererntegut reduziert wird, und zusätzlich der Trockenmassegehalt optimiert wird, sodass ein maximaler Energiegehalt des abgemähten Futterernteguts, insbesondere automatisiert, erzielt wird, wobei der Fahrer während des Mähens des Futterernteguts aktiv unterstützt und entlastet wird. Die Einstellvorrichtung kann, insbesondere teilweise, innerhalb und/oder, insbesondere teilweise, außerhalb des Traktors und/oder der Mähwerkvorrichtung ausgebildet sein. Die sensorbasierten Daten können Daten aufweisen, die mittels einer Sensorvorrichtung erfasst wurden. Die Einstellvorrichtung ist dazu vorgesehen und eingerichtet, insbesondere dazu ausgebildet und/oder programmiert, den Traktor, die Mähwerkvorrichtung und die Querfördereinrichtung in Abhängigkeit sensorbasierter Daten des landwirtschaftlichen Fahrzeuggespanns zum Mähen des Futterernteguts und Futterernteprozessdaten des weiteren landwirtschaftlichen Fahrzeuggespanns des Futterernteprozesses, insbesondere automatisiert, einzustellen, insbesondere zu steuern und/oder zu regeln. Die Einstellvorrichtung kann als Steuer- und/oder Regelvorrichtung ausgebildet sein, die eine Einstellung durch eine Steuerung und/oder Regelung bewirkt. Die Einstellvorrichtung kann eine Rechenvorrichtung und einen Datenspeicher aufweisen. Ferner kann die Einstellvorrichtung für einen Fahrer des landwirtschaftlichen Fahrzeuggespanns ein Display zur Einstellung der Einstellvorrichtung aufweisen.

Die Einstellvorrichtung kann dazu vorgesehen und eingerichtet, insbesondere ausgebildet und/oder programmiert, sein, eine Fahrgeschwindigkeit des Traktors und/oder eine Lenkung des Traktors entlang einer Route auf dem landwirtschaftlichen Feld in Abhängigkeit der sensorbasierten Daten und/oder der Futterernteprozessdaten einzustellen. Die Einstellvorrichtung kann dazu vorgesehen und eingerichtet, insbesondere ausgebildet und/oder programmiert, sein, eine oder mehrere Komponenten der Mähwerkvorrichtung und der Querfördereinrichtung in Abhängigkeit der sensorbasierten Daten und/oder der Futterernteprozessdaten einzustellen. Die Einstellvorrichtung kann dazu vorgesehen und eingerichtet, insbesondere ausgebildet und/oder programmiert, sein, eine oder mehrere Komponenten der Mähwerkvorrichtung und der Querfördereinrichtung zur Erzeugung eines für den Futterernteprozess optimalen abgemähten Erntegutes einzustellen.

Die Einstellvorrichtung kann dazu vorgesehen und eingerichtet, insbesondere ausgebildet und/oder programmiert, sein, Arbeitsaggregate des Traktors in Abhängigkeit der sensorbasierten Daten und/oder der Futterernteprozessdaten einzustellen. Ein solches Arbeitsaggregat des Traktors kann als ein Verbrennungsmotor, ein Getriebe, insbesondere ein unter Volllast oder Teillast schaltbares oder stufenlos schaltbares Getriebe, ein Nebenabtrieb wie eine Zapfwelle, ein Hubwerk, ein Hydrauliksystem und/oder ein sonstiger Aktor, der Einfluss auf den Betrieb des Traktors hat, ausgebildet sein. Die Einstellvorrichtung kann dazu vorgesehen und eingerichtet, insbesondere ausgebildet und/oder programmiert, sein, bezüglich einer oder mehrere Komponenten der Mähwerkvorrichtung und der Querfördereinrichtung in Abhängigkeit der sensorbasierten Daten und/oder der Futterernteprozessdaten eine Schnitthöhe, eine Entlastungskraft mittels einer Entlastungsvorrichtung, einen Bodenabstand einer Bodenkonturanpassungsvorrichtung, einem Kopplungsabstand zum Traktor einzustellen.

Die Futterernteprozessdaten können sensorbasierte Signale und/oder Positionen, insbesondere Positionsdaten, und/oder Eigenschaftsparameter, insbesondere Eigenschaftsparameterdaten und/oder Einstellungsparameterdaten, des weiteren landwirtschaftlichen Fahrzeuggespanns sein.

Ferner kann zusätzlich wenigstens eine weitere landwirtschaftliche Arbeitsmaschine ein weiteres Fahrzeuggespann zum Mähen des Ernteguts, ein Fahrzeuggespann zum Wenden des abgehmähten Ernteguts, ein Fahrzeuggespann zum Schwaden des abgehmähten Ernteguts, ein Fahrzeuggespann zum Ernten der Schwade des abgehmähten Ernteguts, ein Fahrzeuggespann zum Ballenpressen des abgehmähten Ernteguts, und/oder ein Fahrzeuggespann zum Transport des geernteten Futterernteguts sein.

Bei einer vorteilhaften Weiterbildung der erfindungsgemäßen Lösung ist vorgesehen, dass die Einstellvorrichtung als Assistenzsystem eingerichtet ist, welches eine Optimierung des Futterernteprozesses bewirkt, wobei das Assistenzsystem dazu vorgesehen und eingerichtet ist, einen Nutzer bei der Optimierung des Mähens des abgemähten Futterernteguts während des Futterernteprozesses zu unterstützen, wobei diese Optimierung des Futterernteprozesses zumindest die Planung und/oder Durchführung des Mähens des Futterernteguts umfasst, sodass der Energiegehalt, insbesondere einen Rohaschegehalt und/oder einen Trockenmassegehalt und/oder einen Rohfasergehalt, des abgemähten Ernteguts für den Futterernteprozess optimiert wird. Hierdurch wird der Nutzer und/oder der Fahrer des Traktors während des Mähens des Futterernteguts aktiv unterstützt und entlastet.

Bei einer vorteilhaften Weiterbildung der erfindungsgemäßen Lösung ist vorgesehen, dass das landwirtschaftliche Fahrzeuggespann wenigstens eine Sensorvorrichtung zur Ernteguterkennung aufweist, wobei die, insbesondere automatisierte, Einstellung des landwirtschaftlichen Fahrzeuggespanns, insbesondere des Traktors und/oder der Mähwerkvorrichtung und/oder der Querfördereinrichtung, auf Basis von Vorfelderkennung, insbesondere vor dem landwirtschaftlichen Fahrzeuggespann, und/oder einem abgemähten Erntegut hinter dem landwirtschaftlichen Fahrzeuggespann erfolgt. Die Einstellvorrichtung und/oder das Assistenzsystem ist kommunizierend mit der Sensorvorrichtung verbunden, um das Signal der Sensorvorrichtung zu empfangen.

Die Sensorvorrichtung kann zur Detektion von Parametern, insbesondere Parameterdaten, während des Betriebs des landwirtschaftlichen Fahrzeuggespanns auf dem landwirtschaftlichen Feld eingerichtet, insbesondere ausgebildet und/oder programmiert, sein, wobei sich diese Daten auf die Umgebung des landwirtschaftlichen Fahrzeuggespanns, insbesondere auf das landwirtschaftliche Feld, beziehen. Eine solche Sensorvorrichtung kann ein Kamerasystem, eine induktive Sensorvorrichtung, eine kapazitive Sensorvorrichtung und/oder eine Radar basierte Sensorvorrichtung und/oder ein Lidarsystem aufweisen.

Bei einer vorteilhaften Weiterbildung der erfindungsgemäßen Lösung ist vorgesehen, dass das Assistenzsystem dazu vorgesehen und eingerichtet ist, nach vorgegebenen Strategien die Durchführung des Mähens des Futterernteguts zu optimieren, wobei die vorgegebenen Strategien in dem Assistenzsystem hinterlegt sind und/oder an dieses übergeben werden, wobei das Assistenzsystem mittels der vorgegebenen Strategien bezüglich des Energiegehalts, insbesondere des Rohaschegehalts und/oder des Trockenmassegehalts und/oder des Rohfasergehalts, des abgemähten Futterernteguts optimierte Arbeitsparameter für das landwirtschaftliche Fahrzeuggespann zum Mähen des Futterernteguts während des Futterernteprozesses generiert.

Bei einer vorteilhaften Weiterbildung der erfindungsgemäßen Lösung ist vorgesehen, dass das Assistenzsystem kommunizierend mit einer Sensorvorrichtung des landwirtschaftlichen Fahrzeuggespanns verbunden ist, um sensorbasierte Daten in Form des Signals der Sensorvorrichtung zu empfangen, und/oder dass das Assistenzsystem kommunizierend mit einem weiteren landwirtschaftlichen Fahrzeuggespann des Futterernteprozesses verbunden ist, um die Futterernteprozessdaten zu empfangen. Unter einer kommunizierenden Verbindung kann hier und nachfolgenden zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Das landwirtschaftliche Fahrzeuggespann kann eine weitere Sensorvorrichtung aufweisen, die dazu vorgesehen und eingerichtet ist, Kräfte und/oder Drehmomente zu messen, um die Menge des Erntegutes zu ermitteln. Alternativ oder zusätzlich kann eine weitere Sensorvorrichtung dazu vorgesehen und eingerichtet sein, einen Kontakt mit dem Boden detektieren. Alternativ oder zusätzlich kann eine weitere Sensorvorrichtung als Vibrationssensor ausgebildet sein. Alternativ oder zusätzlich kann eine weitere Sensorvorrichtung, insbesondere auf dem Traktor positioniert, dazu vorgesehen und eingerichtet sein, eine Neigung zu erfassen und somit Bodenwellen, insbesondere zeitlich, vorhersagen.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, den Traktor und/oder die Mähwerkvorrichtung und/oder die Querfördereinrichtung zusätzlich in Abhängigkeit von mittels einer Positionsbestimmungseinrichtung bestimmten Position des landwirtschaftlichen Fahrzeuggespanns, insbesondere des Traktors und/oder der Mähwerkvorrichtung und/oder der Querfördereinrichtung, bezüglich des landwirtschaftlichen Feldes einzustellen.

Die Positionsbestimmungseinrichtung kann zur Positionsbestimmung mittels Satellitennavigationssignalen ausgebildet und/oder programmiert sein, wobei wenigstens eine Satellitenvorrichtung zur Positionsbestimmung der einen oder der mehreren landwirtschaftlichen Fahrzeuggespanne bezüglich der landwirtschaftlichen Feldes für die Futterernte verwendet werden kann. Die Satellitenvorrichtung kann GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position des landwirtschaftlichen Fahrzeuggespanns innerhalb des landwirtschaftlichen Feldes für die Futterernte zu ermitteln. Hierbei kann zusätzlich eine stationäre Bodenstation, insbesondere außerhalb des landwirtschaftlichen Feldes, angeordnet sein.

Bei einer vorteilhaften Weiterbildung der erfindungsgemäßen Lösung ist vorgesehen, dass das Assistenzsystem dazu vorgesehen und eingerichtet, insbesondere ausgebildet und/oder programmiert, ist, den Traktor und/oder die Mähwerkvorrichtung und/oder die Querfördereinrichtung in Abhängigkeit von den Futterernteprozessdaten und/oder in Abhängigkeit von mittels einer Positionsbestimmungseinrichtung bestimmten Position des landwirtschaftlichen Fahrzeuggespanns, insbesondere des Traktors und/oder der Mähwerkvorrichtung und/oder der Querfördereinrichtung, bezüglich des landwirtschaftlichen Feldes einzustellen, wobei die Futterernteprozessdaten sensorbasierten Signalen und/oder Positionen und/oder Eigenschaftsparametern eines weiteren landwirtschaftlichen Fahrzeuggespanns zum Mähen des Futterernteguts entsprechen.

Alternativ oder zusätzlich kann das Assistenzsystem dazu vorgesehen und eingerichtet, insbesondere ausgebildet und/oder programmiert, sein, den Traktor und/oder die Mähwerkvorrichtung und/oder die Querfördereinrichtung in Abhängigkeit von den Futterernteprozessdaten und/oder in Abhängigkeit von mittels einer Positionsbestimmungseinrichtung bestimmten Position des landwirtschaftlichen Fahrzeuggespanns, insbesondere des Traktors und/oder der Mähwerkvorrichtung und/oder der Querfördereinrichtung, bezüglich des landwirtschaftlichen Feldes einzustellen, wobei die Futterernteprozessdaten sensorbasierten Signalen und/oder Positionen und/oder Eigenschaftsparametern eines weiteren landwirtschaftlichen Fahrzeuggespanns zum Schwaden des abgehmähten Futterernteguts entsprechen. Das Fahrzeuggespann zum Schwaden des abgehmähten Futterernteguts kann einen Traktor mit einer an dem Traktor gekoppelten Schwadvorrichtung zum Schwaden des abgemähten Futterernteguts aufweisen.

Alternativ oder zusätzlich kann das Assistenzsystem dazu vorgesehen und eingerichtet, insbesondere ausgebildet und/oder programmiert, sein, den Traktor und/oder die Mähwerkvorrichtung und/oder die Querfördereinrichtung in Abhängigkeit von den Futterernteprozessdaten und/oder in Abhängigkeit von mittels einer Positionsbestimmungseinrichtung bestimmten Position des landwirtschaftlichen Fahrzeuggespanns, insbesondere des Traktors und/oder der Mähwerkvorrichtung und/oder der Querfördereinrichtung, bezüglich des landwirtschaftlichen Feldes einzustellen, wobei die Futterernteprozessdaten sensorbasierten Signalen und/oder Positionen und/oder Eigenschaftsparametern eines weiteren landwirtschaftlichen Fahrzeuggespanns zum Ernten der Schwade des abgehmähten Ernteguts entsprechen. Das Fahrzeuggespann zum Ernten der Schwade des abgehmähten Ernteguts kann eine selbstfahrende landwirtschaftliche Arbeitsmaschine, insbesondere ein selbstfahrender Feldhäcksler, sein.

Alternativ oder zusätzlich kann das Assistenzsystem dazu vorgesehen und eingerichtet, insbesondere ausgebildet und/oder programmiert, sein, den Traktor und/oder die Mähwerkvorrichtung und/oder die Querfördereinrichtung in Abhängigkeit von den Futterernteprozessdaten und/oder in Abhängigkeit von mittels einer Positionsbestimmungseinrichtung bestimmten Position des landwirtschaftlichen Fahrzeuggespanns, insbesondere des Traktors und/oder der Mähwerkvorrichtung und/oder der Querfördereinrichtung, bezüglich des landwirtschaftlichen Feldes einzustellen, wobei die Futterernteprozessdaten sensorbasierten Signalen und/oder Positionen und/oder Eigenschaftsparametern eines weiteren landwirtschaftlichen Fahrzeuggespanns zum Transport des geernteten Futterernteguts entsprechen. Das Fahrzeuggespann zum Transport des geernteten Futterernteguts kann einen Traktor und wenigstens einem an diesem Traktor gekoppelten Anhänger zur Aufnahme des abgehmähten Futterernteguts aufweisen.

Die sensorbasierten Signale des Fahrzeuggespanns zum Mähen des Futterernteguts, des Fahrzeuggespanns zum Schwaden des abgehmähten des Futterernteguts, des Fahrzeuggespanns zum Ernten der Schwade des abgehmähten des Futterernteguts und/oder des Fahrzeuggespanns zum Transport des geernteten des Futterernteguts können sich auf Parameter bezüglich des landwirtschaftlichen Feldes beziehen, insbesondere während des Betriebs des landwirtschaftlichen Fahrzeuggespanns auf dem landwirtschaftlichen Feld, beziehen. Die Positionen, insbesondere sensorbasierte Positionen, des Fahrzeuggespanns zum Mähen des Futterernteguts, des Fahrzeuggespanns zum Schwaden des abgehmähten Ernteguts, des Fahrzeuggespanns zum Ernten der Schwade des abgehmähten Ernteguts und/oder des Fahrzeuggespanns zum Transport des geernteten Ernteguts können sich auf mittels der Positionsbestimmungseinrichtung ermittelten Positionen des Fahrzeuggespanns während des Betriebs des landwirtschaftlichen Fahrzeuggespanns auf dem landwirtschaftlichen Feld zur Futterernte beziehen. Die Eigenschaftsparameter, insbesondere sensorbasierte Eigenschaftsparameter, des Fahrzeuggespanns zum Mähen des Futterernteguts, des Fahrzeuggespanns zum Schwaden des abgehmähten Ernteguts, des Fahrzeuggespanns zum Ernten der Schwade des abgehmähten Ernteguts und/oder des Fahrzeuggespanns zum Transport des geernteten Ernteguts können sich auf Einstellungs- und/oder Regelparameter der Komponenten des Fahrzeuggespanns während des Betriebs des landwirtschaftlichen Fahrzeuggespanns auf dem landwirtschaftlichen Feld zur Futterernte beziehen.

Bei einer vorteilhaften Weiterbildung der erfindungsgemäßen Lösung ist vorgesehen, dass das landwirtschaftliche Fahrzeuggespann, insbesondere der Traktor und/oder die Mähwerkvorrichtung und/oder die Querfördereinrichtung, eine Sensorvorrichtung aufweist, die dazu vorgesehen und eingerichtet ist, als sensorbasierte Daten einen erntegut-spezifischen Parameter bezüglich mittels der Mähwerkvorrichtung abgemähten Futterernteguts zu detektieren.

Alternativ oder zusätzlich kann das landwirtschaftliche Fahrzeuggespann, insbesondere der Traktor und/oder die Mähwerkvorrichtung und/oder die Querfördereinrichtung, eine Sensorvorrichtung zur Vorfelderkennung aufweisen, die dazu vorgesehen und eingerichtet ist, als sensorbasierte Daten mindestens einen Parameter bezüglich des landwirtschaftlichen Feldes und/oder einen erntegutspezifischen Parameter bezüglich des Futterernteguts, welches bezüglich einer Fahrtrichtung des Fahrzeuggespanns vor dem Traktor und/oder vor der Mähwerkvorrichtung positioniert ist, zu detektieren.

Alternativ oder zusätzlich kann das landwirtschaftliche Fahrzeuggespann wenigstens eine bezüglich des Traktors und bezüglich der Mähwerkvorrichtung und/oder der Querfördereinrichtung separat ausgebildete Sensorvorrichtung aufweisen. Diese Sensorvorrichtung kann als Satellit und/oder als einer fliegende Drohenvorrichtung und/oder ein Flugzeug ausgebildet sein. Diese separat ausgebildete Sensorvorrichtung kann dazu vorgesehen und ausgebildet sein, die Topologie des landwirtschaftlichen Feldes zu bestimmen. Diese separat ausgebildete Sensorvorrichtung kann dazu vorgesehen und ausgebildet sein, mindestens einen Parameter bezüglich des landwirtschaftlichen Feldes und/oder mindestens einen Parameter bezüglich des abgemähten Futtererntegutes und/oder mindestens einen Parameter bezüglich des Futtererntegutes und/oder mindestens einen Parameter bezüglich des Bodens des landwirtschaftlichen Feldes, insbesondere sensorbasiert, zu erfassen. Diese mittels der separat ausgebildete Sensorvorrichtung erfassten Parameter können Höheninformationen bezüglich des landwirtschaftlichen Feldes und/oder bezüglich des abgemähten Erntegutes und/oder bezüglich des Bodens des landwirtschaftlichen Feldes sein.

Das landwirtschaftliche Fahrzeuggespann kann entlang einer Fahrtrichtung fahren, wobei eine Querrichtung senkrecht und/oder orthogonal zur Fahrtrichtung ausgerichtet ist. Außerdem kann eine Gravitationsrichtung bzw. Erdanziehungskraftrichtung senkrecht und/oder orthogonal zur Fahrtrichtung ausgerichtet sein. Ferner kann die Querrichtung senkrecht und/oder orthogonal zur Gravitationsrichtung bzw. Erdanziehungskraftrichtung ausgerichtet sein. Eine Höhenrichtung ist senkrecht und/oder orthogonal zur Fahrtrichtung und zur Querrichtung ausgerichtet. Die Höhenrichtung kann parallel zur Gravitationsrichtung bzw. Erdanziehungskraftrichtung ausgerichtet sein.

Bei einer vorteilhaften Weiterbildung der erfindungsgemäßen Lösung ist vorgesehen, dass der erntegutspezifische Parameter eine Dichte des abgemähten Ernteguts spezifiziert.

Alternativ oder zusätzlich kann der erntegutspezifische Parameter eine Höhe des abgemähten Erntegut spezifizieren. Die Höhe kann sich auf den abgemähten Erntegutanteil entlang der Höhenrichtung ausgehend vom nicht abgemähten Teil des Erntegutes, welches noch nicht vom landwirtschaftlichen Feld getrennt ist, beziehen.

Alternativ oder zusätzlich kann der erntegutspezifische Parameter eine Breite des abgemähten Ernteguts spezifizieren. Die Breite kann sich auf die Breite des abgemähten Ernteguts bezüglich der Querrichtung beziehen.

Alternativ oder zusätzlich kann der erntegutspezifische Parameter eine Halmausrichtung des abgemähten Ernteguts spezifizieren. Die Halmausrichtung kann sich auf die Fahrtrichtung und/oder Querrichtung und/oder Höhenrichtung beziehen.

Alternativ oder zusätzlich kann der erntegutspezifische Parameter eine Masse und/oder eine Ertragsmenge des abgemähten Ernteguts spezifizieren.

Alternativ oder zusätzlich kann der erntegutspezifische Parameter sich auf Fremdkörper, insbesondere lebende oder nicht lebende Fremdkörper, im abgemähten Erntegut beziehen. Es kann vorgesehen sein, dass die erkannten Fremdkörper kartiert werden und an eine Fremdköperbeseitigungsvorrichtung und/oder ein nachfolgendes und/oder weiteres landwirtschaftliches Fahrzeuggespann des Futterernteprozesses zur Kollisionsvermeidung übermittelt wird. Hierbei kann die Fremdköperbeseitigungsvorrichtung eine autonom fahrende landwirtschaftliche Arbeitsmaschine sein, die beispielweise den Fremdkörper beseitigt.

Bei einer vorteilhaften Weiterbildung der erfindungsgemäßen Lösung ist vorgesehen, dass das landwirtschaftliche Fahrzeuggespann, insbesondere der Traktor und/oder die Mähwerkvorrichtung und/oder die Querfördereinrichtung, eine Sensorvorrichtung aufweist, die dazu vorgesehen und eingerichtet ist, als sensorbasierte Daten einen Auflagedruck der Mähwerkvorrichtung auf einem Boden des landwirtschaftlichen Feldes zu ermitteln.

Alternativ oder zusätzlich kann das landwirtschaftliche Fahrzeuggespann, insbesondere der Traktor und/oder die Mähwerkvorrichtung und/oder die Querfördereinrichtung, eine Sensorvorrichtung aufweisen, die dazu vorgesehen und eingerichtet ist, als sensorbasierte Daten einen Feuchtigkeitswert auf einem Boden des landwirtschaftlichen Feldes zu ermitteln.

Alternativ oder zusätzlich kann das landwirtschaftliche Fahrzeuggespann, insbesondere der Traktor und/oder die Mähwerkvorrichtung und/oder die Querfördereinrichtung, eine Sensorvorrichtung aufweisen, die dazu vorgesehen und eingerichtet ist, als sensorbasierte Daten eine Schnitthöhe der Mähwerkvorrichtung bezüglich eines Bodens des landwirtschaftlichen Feldes zu ermitteln.

Bei einer vorteilhaften Weiterbildung der erfindungsgemäßen Lösung ist vorgesehen, dass die Einstellvorrichtung ein digitales Abbild, insbesondere ein dreidimensionales Modelabbild, des zu bearbeitenden landwirtschaftlichen Feldes, insbesondere des Bodens des zu bearbeitenden landwirtschaftlichen Feldes, und/oder Wetterdaten und/oder Futtererntegutzustandsdaten in Form weiterer sensorbasierter Daten aufweist, wobei das digitale Abbild des zu bearbeitenden landwirtschaftlichen Feldes Informationen, insbesondere Höheninformationen, bezüglich des Bodens des zu bearbeitenden landwirtschaftlichen Feldes aufweist, wobei die Einstellvorrichtung dazu vorgesehen und eingerichtet ist, den Traktor und die Mähwerkvorrichtung in Abhängigkeit sensorbasierter Daten des landwirtschaftlichen Fahrzeuggespanns zum Mähen und Schwaden des Futterernteguts und Futterernteprozessdaten eines weiteren landwirtschaftlichen Fahrzeuggespanns des Futterernteprozesses und den weiteren sensorbasierten Daten einzustellen.

Bei einer vorteilhaften Weiterbildung der erfindungsgemäßen Lösung ist vorgesehen, dass die Mähwerkvorrichtung mittels einem Anbaurahmen an einem Hubwerk, insbesondere einen fronseitigen Hubwerk und/oder einem heckseitigen Hubwerk, des Traktors ankoppelbar ausgebildet ist, und einen Tragrahmen aufweist, an dem eine Mäheinheit angreift, wobei der Tragrahmen und der Anbaurahmen einerseits über einen Schwenkrahmen und anderseits über einen Lenker unter Ausbildung einer trapezartigen Viergelenkskinematik derart miteinander gekoppelt sind, dass der Schwenkrahmen über eine erste Schwenkachse am Tragrahmen und über eine zweite Schwenkachse am Anbaurahmen angreift, und dass der Lenker über eine dritte Schwenkachse am Tragrahmen und über eine vierte Schwenkachse am Anbaurahmen angreift, wobei die Mähwerkvorrichtung wenigstens einen Entlastungszylinder aufweist, der im Mähbetrieb aktiv geschaltet ist, einerseits am Anbaurahmen und andererseits am Schwenkrahmen gelenkig angreift, nämlich über ein Zylinderkolbengehäuse am Anbaurahmen und über einen Zylinderkolben am Schwenkrahmen, wobei die Einstellvorrichtung dazu vorgesehen und eingerichtet ist, den Entlastungszylinder der Mähwerkvorrichtung in Abhängigkeit der sensorbasierten Daten des landwirtschaftlichen Fahrzeuggespanns zum Mähen des Futterernteguts und/oder der Futterernteprozessdaten eines weiteren landwirtschaftlichen Fahrzeuggespanns des Futterernteprozesses und/oder weiterer sensorbasierter Daten derart einzustellen, dass der Energiegehalt, insbesondere der Rohaschegehalt und/oder der Trockenmassegehalt und/oder der Rohfasergehalt, des abgemähten Ernteguts für den Futterernteprozess optimiert wird.

Bei einer vorteilhaften Weiterbildung der erfindungsgemäßen Lösung ist vorgesehen, dass die Mähwerkvorrichtung wenigstens eine als Trommelmähwerk und/oder als Scheibenmähwerk und/oder als Balkenmähwerk ausbildete Mäheinheit aufweist.

Bei einer vorteilhaften Weiterbildung der erfindungsgemäßen Lösung ist vorgesehen, dass die Mäheinheit der Mähwerkvorrichtung als Scheibenmähwerk ausgebildet ist, wobei das Scheibenmähwerk mehrere Schneidorgane zum Trennen von Futtererntegut aufweist, wobei die Schneidorgane bezüglich einer Querrichtung, die quer zur Fahrtrichtung ausgerichtet ist, unter Ausbildung jeweils eines Mähbalkens nebeneinander positioniert sind, wobei die Mähwerkvorrichtung und der Traktor derart ausgebildet sind, dass die Schneidorgane über einen Zapfwellenantrieb des Traktors antreibbar sind.

Bei einer vorteilhaften Weiterbildung der erfindungsgemäßen Lösung ist vorgesehen, dass das Assistenzsystem zur Optimierung des Energiegehalts, insbesondere des Rohaschegehalts und/oder des Trockenmassegehalts und/oder des Rohfasergehalts, des abgemähten Ernteguts dazu vorgesehen und eingerichtet ist, während der Planung und/oder der Durchführung des Mähens des Futterernteguts eine Feldeinteilung des landwirtschaftlichen Feldes zu bestimmen und/oder zu nutzen, und/oder dass das Assistenzsystem zur Optimierung des Energiegehalts, insbesondere des Rohaschegehalts und/oder des Trockenmassegehalts und/oder des Rohfasergehalts, des abgemähten Ernteguts dazu vorgesehen und eingerichtet ist, während der Durchführung des Mähens des Futterernteguts eine automatisierte Aushebung der Mähwerkvorrichtung zu bewirken, und/oder dass das Assistenzsystem dazu vorgesehen und eingerichtet ist, den Energiegehalt des abgemähten Futterernteguts zu maximieren, und/oder dass das Assistenzsystem dazu vorgesehen und eingerichtet ist, den Rohaschegehalt des abgemähten Futterernteguts zu minimieren, und/oder dass das Assistenzsystem dazu vorgesehen und eingerichtet ist, den Rohfaser-gehalt des abgemähten Futterernteguts zu minimieren, und/oder dass das Assistenzsystem dazu vorgesehen und eingerichtet ist, einen Trockenmassegehalt des abgemähten Futterernteguts im Bereich bis zu 15% und/oder von 30% bis 45%, insbesondere 30% bis 40%, zu bewirken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein landwirtschaftliches Fahrzeuggespann zum Mähen von Futtererntegut,
- Fig. 2: eine Seitenansicht einer Mähwerkvorrichtung des landwirtschaftlichen Fahrzeuggespanns zum Mähen von Futtererntegut, und
- Fig. 3: mehrere landwirtschaftliche Fahrzeuggespanne auf einem landwirtschaftlichen Feld zur Futterernte mit einem auf elektronischem Datenaustausch basierenden Assistenzsystem zur Optimierung des Futterernteprozesses.

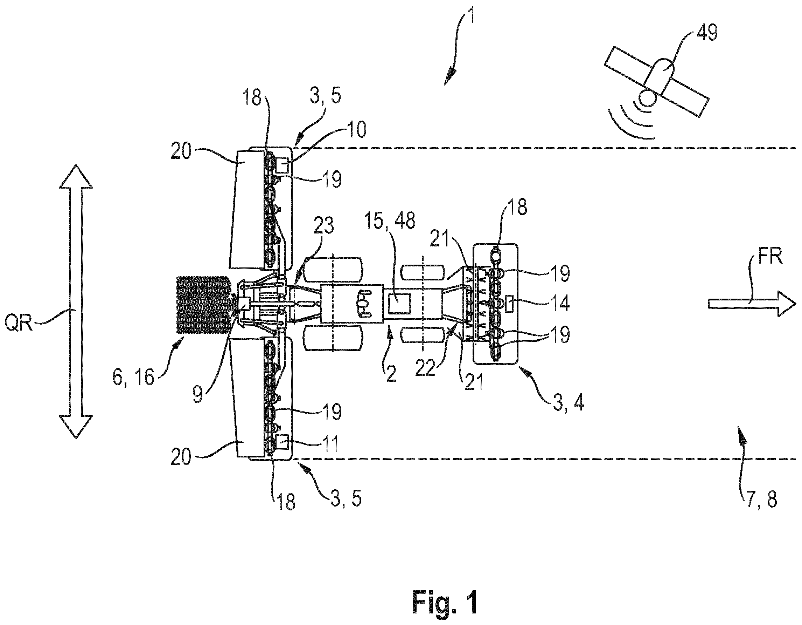

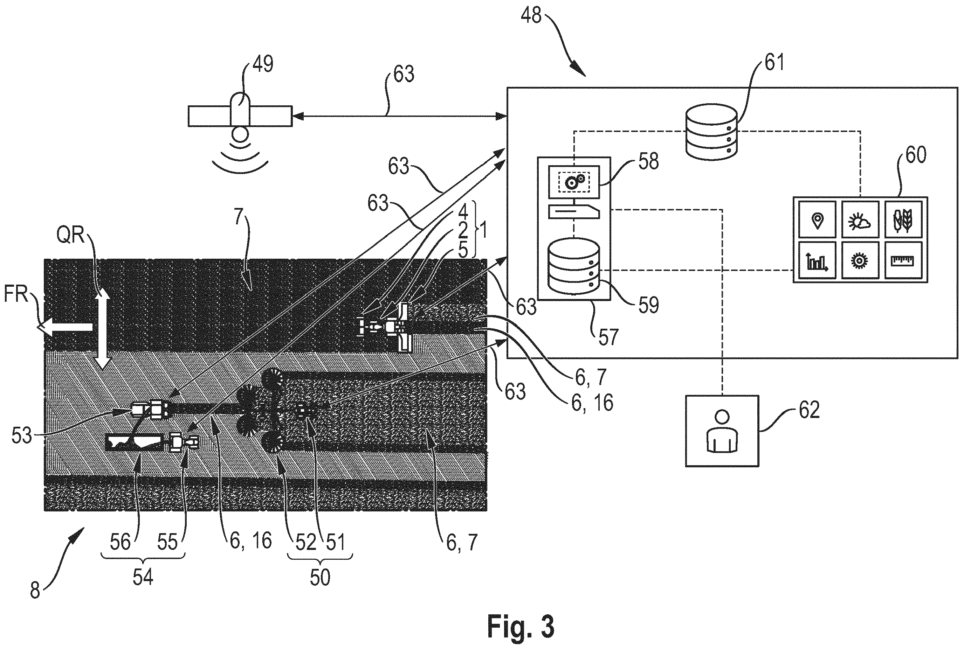

Die Fig. 1 zeigt ein landwirtschaftliches Fahrzeuggespann 1 mit einem Traktor 2 und mehreren an dem Traktor 2 gekoppelten, insbesondere lösbar gekoppelten, Mähwerkvorrichtungen 3 zum Mähen und/oder Schwaden des Futterernteguts 7, welches auf einem landwirtschaftlichen Feld 8, wie in der Fig. 3 angedeutet, positioniert ist. Dieses landwirtschaftliche Fahrzeuggespann 1, bei dem der Traktor 2 eine frontseitige Mähwerkvorrichtung 4 schiebt und zwei heckseitige Mähwerkvorrichtungen 5 zieht, fährt in der Fig. 1 entlang einer Fahrtrichtung FR, wobei eine Querrichtung QR des landwirtschaftliches Fahrzeuggespanns 1 senkrecht und/oder orthogonal zur Fahrtrichtung FR ausgerichtet ist.

Die Mähwerkvorrichtungen 3 sind in der Fig. 1 bespielhaft als Scheibenmähwerke ausgebildet, die Schneidorgane 19 zum Trennen des Futterernteguts 7 aufweisen, wobei die Schneidorgane 19 quer zur Fahrrichtung FR bzw. bezüglich der Querrichtung QR betrachtet, unter Ausbildung jeweils eines Mähbalkens 18 nebeneinander positioniert sind. Die frontseitige Mähwerkvorrichtung 4 kann optionale Zusatzausstattung 21 aufweisen, die als Zinkenaufbereiter oder Walzenaufbereiter ausgeführt sein kann. Die heckseitigen Mähwerkvorrichtungen 5 können gleichfalls mit einer solchen, jedoch nicht dargestellten, Zusatzausstattung 7 ausgeführt sein. Die heckseitigen Mähwerkvorrichtungen 5 sind mit Querfördervorrichtungen 20 zur Schwadablage als Zusatzausstattung ausgestattet, die dem Transport des abgemähten Erntegutes 6 quer zur Fahrrichtung FR dienen. Die Querfördervorrichtungen 20 können als Bandeinheiten und/oder Schneckenförderer ausgeführt sein. Mittels der Querförderrichtungen 20 lassen sich verschiedene Formen der Ablage eines Schwads 16 erreichen.

Zur Adaption der Mähwerkvorrichtung 4,5 am Traktor weist dieses ein frontseitiges Hubwerk 22 sowie ein heckseitiges Hubwerk 23 auf. Die Hubwerke 22, 23 sind als Dreipunkthubwerke ausgeführt und werden hydraulisch betätigt.

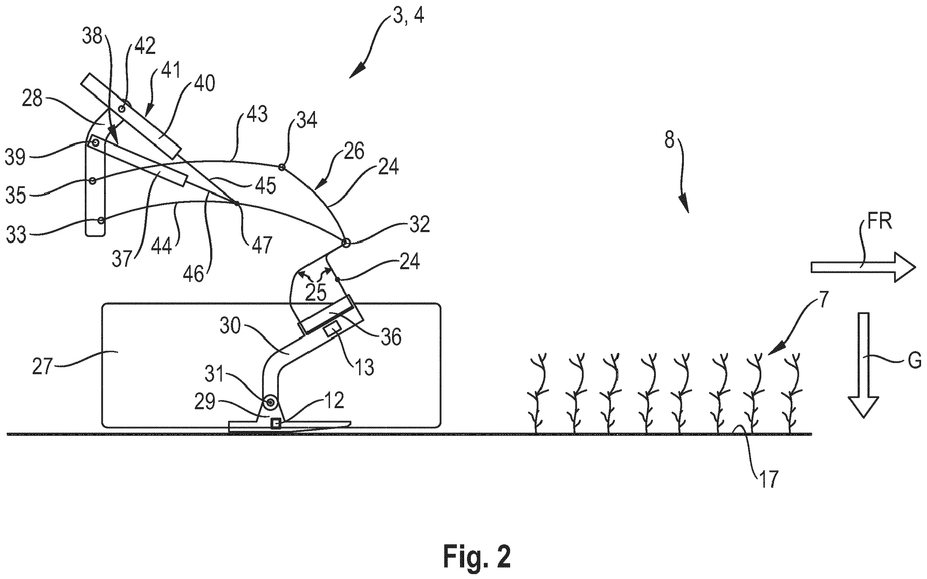

Die frontseitige Mähwerkvorrichtung 3, 4 ist in der Fig. 2 in einer vereinfachten Schnittdarstellung dargestellt. Diese frontseitige Mähwerkvorrichtung 3, 4 ist mittels einem Anbaurahmen 28 an dem fronseitigen Hubwerk 22 des Traktors 2 ankoppelbar ausgebildet und weist einen Tragrahmen 24 auf, an dem eine Mäheinheit 27 angreift. Diese Mäheinheit 27 kann alternativ oder zusätzlich zur Darstellung der Fig. 1 als Trommelmähwerk und/oder als Scheibenmähwerk und/oder als Balkenmähwerk ausbildet sein.

Der Tragrahmen 24 und der Anbaurahmen 28 sind einerseits über einen Schwenkrahmen 44 und anderseits über einen Lenker 43 unter Ausbildung einer trapezartigen Viergelenkskinematik derart miteinander gekoppelt, dass der Schwenkrahmen 44 über eine erste Schwenkachse 32 am Tragrahmen 24 und über eine zweite Schwenkachse 33 am Anbaurahmen 28 angreift, und dass der Lenker 43 über eine dritte Schwenkachse 34 am Tragrahmen 24 und über eine vierte Schwenkachse 35 am Anbaurahmen 28 angreift, wobei die Mähwerkvorrichtung 3, 4 wenigstens einen Entlastungszylinder 38 aufweist, der im Mähbetrieb aktiv geschaltet ist, und einerseits am Anbaurahmen 28 und andererseits am Schwenkrahmen 44 gelenkig angreift, nämlich über ein Zylinderkolbengehäuse 37 am Anbaurahmen 28 und über einen Zylinderkolben 46 am Schwenkrahmen 44. Der Schwenkrahmen 44 und der Lenker 43 greifen insbesondere an einem oberen Abschnitt 26 des Tragrahmens 24 an, wobei der Schwenkrahmen 44 vorzugweise in einem Übergangsbereich zwischen einem unteren Abschnitt 25 und dem oberen Abschnitt 26 des Tragrahmens 12 angreift. Das Zylinderkolbengehäuse 37 des Entlastungszylinders 38 greift am Anbaurahmen 28 über eine Schwenkachse 39 und der Zylinderkolben 46 desselben greift über eine Schwenkachse 47 am Schwenkrahmen 44 gelenkig an. Statt einem Entlastungszylinder 38 kann auch eine oder mehrere Federn - wie z.B. Zugfedern - vorgesehen werden. Das Mähwerkvorrichtung 3, 4 verfügt weiterhin einen Aushubzylinder 41, der im Mähbetrieb passiv geschaltet ist.

Der Aushubzylinder 41 greift einerseits am Anbaurahmen 28 und andererseits am Schwenkrahmen 44 gelenkig an, nämlich über ein Zylinderkolbengehäuse 40 des Aushubzylinders 41 am Anbaurahmen 28 und über einen Zylinderkolben 45 des Aushubzylinders 41 am Schwenkrahmen 44. So greift das Zylinderkolbengehäuse 40 des Aushubzylinders 41 über eine Schwenkachse 42 am Anbaurahmen 28 und der Zylinderkolben 45 über eine Schwenkachse 47 am Schwenkrahmen 44 an.

Die Schwenkachsen 32, 33, 34, und 35 der trapezartigen Viergelenkskinematik aus dem Tragrahmen 24, dem Anbaurahmen 28, dem Schwenkrahmen 44 und dem Lenker 43, erstrecken sich dabei vorzugsweise parallel zur Schwenkachse 31, also jeweils in Querrichtung QR und im Wesentlichen parallel zum Boden 17 und/oder zur Bodenoberfläche des landwirtschaftlichen Feldes 8.

Die Mäheinheit 27 der Mähwerkvorrichtung 3 kann eine Gleitkufe 29 und einen Mäheinheitenträger 30 aufweisen, wobei die Gleitkufe 29 über die Schwenkachse 31 an dem Mäheinheitenträger 30 gelenkig angreift, und wobei der Mäheinheitenträger 30 über eine Schwenkachse 36 an dem Tragrahmen 24 der Mähwerkvorrichtung 3 gelenkig angreift, nämlich an dem unteren Abschnitt 25 des Tragrahmens 24.

Gemäß der Fig. 1 und der Fig. 3 weist das landwirtschaftliche Fahrzeuggespann 1 wenigstens eine Einstellvorrichtung 15 auf, die dazu vorgesehen und eingerichtet ist, den Traktor 2 und die Mähwerkvorrichtung 3 in Abhängigkeit sensorbasierter Daten des landwirtschaftlichen Fahrzeuggespanns 1 zum Mähen des Futterernteguts 7 und Futterernteprozessdaten eines weiteren landwirtschaftliches Fahrzeuggespanns 50, 53, 54 des Futterernteprozesses einzustellen, um einen Energiegehalt, insbesondere einen Rohaschegehalt und/oder einen Trockenmassegehalt und/oder einen Rohfasergehalt, des abgemähten Ernteguts 6 für den Futterernteprozess zu optimieren. Gemäß der Fig. 1 und der Fig. 2 weist das erfindungsgemäße landwirtschaftliche Fahrzeuggespann 1 wenigstens eine Sensorvorrichtung 9, 10, 11, 12, 13, 14 zur Erzeugung der sensorbasierten Daten auf.

Das landwirtschaftliche Fahrzeuggespann 1, insbesondere der Traktor 2 und/oder die Mähwerkvorrichtung 3, weist eine Sensorvorrichtung 9, 12, 13 auf, die dazu vorgesehen und eingerichtet ist, als sensorbasierte Daten einen erntegutspezifischen Parameter bezüglich mittels der Mähwerkvorrichtung 3 abgemähten Ernteguts 6 zu detektieren. Die Sensorvorrichtung 9 kann an einer Tragvorrichtung für die heckseitigen Mähwerkvorrichtungen 3, 5 positioniert sein. Die Sensorvorrichtung 12 kann an einer Gleitkufe 29 einer Mähwerkvorrichtung 3 positioniert sein. Die Sensorvorrichtung 13 kann an einem Mäheinheitenträger 30 einer Mähwerkvorrichtung 3 positioniert sein.

Das landwirtschaftliche Fahrzeuggespann 1, insbesondere der Traktor 2 und/oder die Mähwerkvorrichtung 3, weist eine Sensorvorrichtung 10, 11, 14 zur Vorfelderkennung auf, die dazu vorgesehen und eingerichtet ist, als sensorbasierte Daten mindestens einen Parameter bezüglich des landwirtschaftlichen Feldes 8 und/oder einen erntegutspezifischen Parameter bezüglich des Futterernteguts 7, welches bezüglich der Fahrtrichtung FR des Fahrzeuggespanns 1 vor dem Traktor 2 und/oder vor der Mähwerkvorrichtung 3 positioniert ist, zu detektieren.

Wie in der Fig. 3 angedeutet, ist die Einstellvorrichtung 15 als Assistenzsystem 48 eingerichtet, welches eine Optimierung des Futterernteprozesses bewirkt, wobei das Assistenzsystem 48 dazu vorgesehen und eingerichtet ist, einen Nutzer 62 bei der Optimierung des Mähens des Futterernteguts 7 während des Futterernteprozesses zu unterstützen, wobei diese Optimierung des Futterernteprozesses zumindest die Planung und/oder Durchführung des Mähens des Futterernteguts 7 umfasst.

Die Fig. 3 zeigt mehrere landwirtschaftliche Fahrzeuggespanne 1, 50, 53 und 54 auf dem landwirtschaftlichen Feld 8 zur Futterernte und das auf elektronischem Datenaustausch basierende Assistenzsystem 48 zur Optimierung des Futterernteprozesses. Die Fahrtrichtung FR und die Querrichtung QR beziehen sich in der Fig. 4 auf das landwirtschaftliche Fahrzeuggespann 1, welches zum Mähen des Futterernteguts 7 ausgebildet ist. Das Assistenzsystem 32 kann, insbesondere teilweise, innerhalb des Traktor 2, wie in der Fig. 1 angedeutet und/oder wie in der Fig. 3 angedeutet, insbesondere teilweise, außerhalb des Traktors 2 und außerhalb der Mähwerkvorrichtung 3 ausgebildet sein.

Jedes landwirtschaftliche Fahrzeuggespann 1, 50, 53 und 54 weist jeweils eine Sensorvorrichtung auf, die dazu vorgesehen und eingerichtet ist, mindestens einen Parameter bezüglich des landwirtschaftlichen Feldes 8 zu detektieren und ein Signal auszugeben, welches den detektierten Parameter darstellt. Jedes landwirtschaftliche Fahrzeuggespann 1, 50, 53 und 54 weist wenigstens eine nicht dargestellte Einstellvorrichtung auf, die kommunizierend mit der Sensorvorrichtung verbunden ist, um das Signal der Sensorvorrichtung zu empfangen, wobei die Einstellvorrichtung dazu vorgesehen und eingerichtet ist, das jeweilige landwirtschaftliche Fahrzeuggespann in Abhängigkeit des von der Sensorvorrichtung empfangenen Signals einzustellen.

Jedes landwirtschaftliche Fahrzeuggespann 1, 50, 53 und 54 weist jeweils eine in der Fig. 3 nicht dargestellte Einstellvorrichtung auf, die als Teil des Assistenzsystems 48 dazu eingerichtet ist, einen drahtlosen, elektronischen Datenaustausch mittels einer kommunizierenden Verbindungen, insbesondere mittels einer drahtlosen Kommunikationsverbindung 63, mit dem außerhalb der landwirtschaftlichen Fahrzeuggespanne 1, 50, 53 und 54 positioniertem Teil des Assistenzsystems 48 zur Optimierung eines Futterernteprozesses auszuführen.

Jede Einstellvorrichtung eines jeden landwirtschaftlichen Fahrzeuggespanns 1, 50, 53 und 54 ist jeweils dazu vorgesehen und eingerichtet, einen drahtlosen, elektronischen Datenaustausch mittels einer kommunizierenden Verbindungen mit einer außerhalb des landwirtschaftlichen Fahrzeuggespanns 1, 50, 53 und 54 positionierten Positionsbestimmungseinrichtung 49 auszuführen, um die Position des jeweiligen landwirtschaftlichen Fahrzeuggespanns 1, 34, 37 und 38 bezüglich des landwirtschaftlichen Feldes 6 zu bestimmen.

Die Einstellvorrichtung 15 des landwirtschaftlichen Fahrzeuggespanns 1 zum Mähen des Futterernteguts 7 ist dazu vorgesehen und eingerichtet, die von der Sensorvorrichtung 9, 10, 11, 12, 13, 14 empfangenen Signale an das Assistenzsystem 48 zur Optimierung des Futterernteprozesses bezüglich des abgemähten Ernteguts 6 und/oder des Futterernteguts 7 des landwirtschaftlichen Feldes 8 zu übermitteln. Alternativ oder zusätzlich ist die Einstellvorrichtung 15 des landwirtschaftlichen Fahrzeuggespanns 1 dazu vorgesehen und eingerichtet, die von der Sensorvorrichtung 9, 10, 11, 12, 13, 14 empfangenen Signale mit dem mittels der Positionsbestimmungseinrichtung 49 erfassen Position zu verknüpfen und dies an das Assistenzsystem 48 zur Optimierung des Futterernteprozesses bezüglich des Futterernteguts 7 des landwirtschaftlichen Feldes 8 zu übermitteln.

Alternativ oder zusätzlich kann das Assistenzsystem 48 dazu vorgesehen und eingerichtet, insbesondere ausgebildet und/oder programmiert, sein, den Traktor 2 und/oder die Mähwerkvorrichtung 3 in Abhängigkeit von den Futterernteprozessdaten und/oder in Abhängigkeit von mittels einer Positionsbestimmungseinrichtung 49 bestimmten Position des landwirtschaftlichen Fahrzeuggespanns 1, insbesondere des Traktors 2 und/oder der Mähwerkvorrichtung 3, bezüglich des landwirtschaftlichen Feldes 8 einzustellen, wobei die Futterernteprozessdaten sensorbasierten Signalen und/oder Positionen und/oder Eigenschaftsparametern eines weiteren landwirtschaftlichen Fahrzeuggespanns 50 zum Schwaden des abgehmähten Futterernteguts 6 entsprechen. Das Fahrzeuggespann 50 zum Schwaden des abgehmähten Futterernteguts 6 kann einen Traktor 51 mit einer an dem Traktor gekoppelten Schwadvorrichtung 52 zum Schwaden des abgemähten Ernteguts 6 aufweisen.

Alternativ oder zusätzlich kann das Assistenzsystem 48 dazu vorgesehen und eingerichtet, insbesondere ausgebildet und/oder programmiert, sein, den Traktor 2 und/oder die Mähwerkvorrichtung 3 in Abhängigkeit von den Futterernteprozessdaten und/oder in Abhängigkeit von mittels einer Positionsbestimmungseinrichtung 49 bestimmten Position des landwirtschaftlichen Fahrzeuggespanns 1, insbesondere des Traktors 2 und/oder der Mähwerkvorrichtung 3, bezüglich des landwirtschaftlichen Feldes 8 einzustellen, wobei die Futterernteprozessdaten sensorbasierten Signalen und/oder Positionen und/oder Eigenschaftsparametern eines weiteren landwirtschaftlichen Fahrzeuggespanns 53 zum Ernten der Schwade 16 des abgehmähten des Futterernteguts 6 entsprechen. Das Fahrzeuggespann 53 zum Ernten der Schwade 16 des abgehmähten Futterernteguts 6 kann eine selbstfahrende landwirtschaftliche Arbeitsmaschine, insbesondere ein selbstfahrender Feldhäcksler, sein.

Alternativ oder zusätzlich kann das Assistenzsystem 48 dazu vorgesehen und eingerichtet, insbesondere ausgebildet und/oder programmiert, sein, den Traktor 2 und/oder die Mähwerkvorrichtung 3 in Abhängigkeit von den Futterernteprozessdaten und/oder in Abhängigkeit von mittels einer Positionsbestimmungseinrichtung 49 bestimmten Position des landwirtschaftlichen Fahrzeuggespanns 1, insbesondere des Traktors 2 und/oder der Mähwerkvorrichtung 3, bezüglich des landwirtschaftlichen Feldes 8 einzustellen, wobei die Futterernteprozessdaten sensorbasierten Signalen und/oder Positionen und/oder Eigenschaftsparametern eines weiteren landwirtschaftlichen Fahrzeuggespanns 54 zum Transport des geernteten Futterernteguts 7 entsprechen. Das Fahrzeuggespann 54 zum Transport des geernteten Futterernteguts 7 kann einen Traktor 55 und wenigstens einem an diesem Traktor 55 gekoppelten Anhänger 56 zur Aufnahme des abgemähten Ernteguts 6 aufweisen.

Die Fig. 3 zeigt das Assistenzsystem 48 mit einem datenbankbasierten Verwaltungssystem 57, das eine Verarbeitungseinrichtung 58 und eine mit dieser zur Übertragung von Daten verbundene Datenbank 59 umfasst. Die Datenbank 59 kann als zentrale Datenbank 59 oder aber als dezentrale, also verteilte, Datenbank 59 ausgebildet sein. Auch ist es möglich, dass die Datenbank 59 als cloudbasierte Datenbank 59 implementiert ist. Mit der Verarbeitungseinrichtung 58 kann zudem eine nicht dargestellte Anzeigeeinrichtung verbunden sein, die entweder Teil des Verwaltungssystems 57 oder unabhängig von dem Verwaltungssystem 57 ist. Die nicht dargestellte Anzeigeeinrichtung kann dazu eingerichtet sein, verschiedene von der Verarbeitungseinrichtung 58 erzeugte oder übermittelte grafische Darstellungen dem Nutzer 62 des Verwaltungssystems 57, beispielsweise einem Landwirt oder einem Fahrer, anzuzeigen. Die Verarbeitungseinrichtung 58 kann weiterhin mit einer sogenannten Referenzdatenbank 61 zur Übertragung von Daten verbunden sein, in der sogenannte Referenzdaten 60 hinterlegt sein können, auf die die Verarbeitungseinrichtung 58 zugreifen kann. Die Referenzdatenbank 61 kann beispielsweise historische Qualitätskriterien, insbesondere einer bereits geernteten Futterernte des landwirtschaftlichen Feldes als Referenzdaten 60 umfassen.

### Bezugszeichenliste

- 1: Landwirtschaftliches Fahrzeuggespann
- 2: Traktor
- 3: Mähwerkvorrichtung
- 4: Fronseitige Mähwerkvorrichtung
- 5: Heckseitige Mähwerkvorrichtung
- 6: abgemähtes Erntegut
- 7: Futtererntegut
- 8: landwirtschaftliches Feld
- 9: Sensorvorrichtung
- 10: Sensorvorrichtung
- 11: Sensorvorrichtung
- 12: Sensorvorrichtung
- 13: Sensorvorrichtung
- 14: Sensorvorrichtung
- 15: Einstellvorrichtung
- 16: Schwad
- 17: Boden
- 18: Mähbalken
- 19: Schneidorgane
- 20: Querfördervorrichtung
- 21: Zusatzausstattung
- 22: Frontseitiges Hubwerk
- 23: Heckseitiges Hubwerk
- 24: Tragrahmen
- 25: Unterer Abschnitt
- 26: Oberer Abschnitt
- 27: Mäheinheit
- 28: Anbaurahmen
- 29: Gleitkufe
- 30: Mäheinheitenträger
- 31: Schwenkachse
- 32: Schwenkachse
- 33: Schwenkachse
- 34: Schwenkachse
- 35: Schwenkachse
- 36: Schwenkachse
- 37: Zylinderkolbengehäuse
- 38: Entlastungszylinder
- 39: Schwenkachse
- 40: Zylinderkolbengehäuse
- 41: Aushubzylinder
- 42: Schwenkachse
- 43: Lenker
- 44: Schwenkrahmen
- 45: Zylinderkolben
- 46: Zylinderkolben
- 47: Schwenkachse
- 48: Assistenzsystems
- 49: Positionsbestimmungseinrichtung
- 50: Landwirtschaftliches Fahrzeuggespann zum Schwaden des Futterernteguts
- 51: Traktor
- 52: Schwadvorrichtung
- 53: Selbstfahrende landwirtschaftliche Arbeitsmaschine zum Ernten der Schwade
- 54: Landwirtschaftliches Fahrzeuggespann zum Transport des Futterernteguts
- 55: Traktor
- 56: Anhänger
- 57: Verwaltungssystem
- 58: Verarbeitungseinrichtung
- 59: Datenbank
- 60: Referenzdaten
- 61: Referenzdatenbank
- 62: Nutzer
- 63: Drahtlose Kommunikationsverbindung
- FR: Fahrtrichtung
- QR: Querrichtung
- G: Gravitationsrichtung

## Patentansprüche

1. Landwirtschaftliches Fahrzeuggespann (1) zum Mähen und Schwaden von Erntegut, insbesondere Futtererntegut (7), während eines Ernteprozesses, insbesondere Futterernteprozesses,
- mit einem Traktor (2), und mit wenigstens einer an dem Traktor (2) gekoppelten Mähwerkvorrichtung (3) zum Mähen von Erntegut, insbesondere Futtererntegut (7), und mit einer an der Mähwerkvorrichtung (3) gekoppelten Querfördervorrichtung (20) zum Schwaden des abgemähten Ernteguts (6),
**dadurch gekennzeichnet,**
- **dass** das landwirtschaftliche Fahrzeuggespann (1) wenigstens eine Einstellvorrichtung (15) aufweist, die dazu vorgesehen und eingerichtet ist, den Traktor (2) und die Mähwerkvorrichtung (3) und die Querfördervorrichtung (20) in Abhängigkeit sensorbasierter Daten des landwirtschaftlichen Fahrzeuggespanns (1) zum Mähen und Schwaden des Ernteguts, insbesondere Futterernteguts (7), und Ernteprozessdaten, insbesondere Futterernteprozessdaten, eines weiteren landwirtschaftliches Fahrzeuggespanns (50, 53, 54) des Ernteprozesses, insbesondere Futterernteprozesses, einzustellen, um einen Energiegehalt, insbesondere einen Rohaschegehalt und/oder einen Trockenmassegehalt und/oder einen Rohfasergehalt, des abgemähten Ernteguts (6), insbesondere Futterernteguts (7), für den Ernteprozesses, insbesondere Futterernteprozess, zu optimieren.

2. Landwirtschaftliches Fahrzeuggespann (1) nach Anspruch 1,
**dadurch gekennzeichnet,**
**dass** die Einstellvorrichtung (15) als Assistenzsystem (48) eingerichtet ist, welches eine Optimierung des Futterernteprozesses bewirkt, wobei das Assistenzsystem (48) dazu vorgesehen und eingerichtet ist, einen Nutzer (62) bei der Optimierung des Mähens und des Schwadens des abgemähten Ernteguts (6) und des Futterernteguts (7) während des Futterernteprozesses zu unterstützen, wobei diese Optimierung des Futterernteprozesses zumindest die Planung und/oder Durchführung des Mähens des Futterernteguts (7) und des Schwadens des abgemähten Ernteguts (6) umfasst.

3. Landwirtschaftliches Fahrzeuggespann (1) nach Anspruch 1 oder 2,
**dadurch gekennzeichnet,**
- **dass** das landwirtschaftliche Fahrzeuggespann (1) wenigstens eine Sensorvorrichtung (9, 10, 11, 12, 13, 14) zur Ernteguterkennung aufweist,
- wobei die Einstellung des landwirtschaftlichen Fahrzeuggespanns (1), insbesondere des Traktors (2) und/oder der Mähwerkvorrichtung (3) und/oder der Querfördervorrichtung (20), auf Basis von Vorfelderkennung und/oder einer Futtererntegutablage hinter dem landwirtschaftlichen Fahrzeuggespann (1) erfolgt.

4. Landwirtschaftliches Fahrzeuggespann (1) nach Anspruch 2 oder 3,
**dadurch gekennzeichnet,**
- **dass** das Assistenzsystem (48) dazu vorgesehen und eingerichtet ist, nach vorgegebenen Strategien die Durchführung des Mähens des Futterernteguts (7) zu optimieren, wobei die vorgegebenen Strategien in dem Assistenzsystem (48) hinterlegt sind und/oder an dieses übergeben werden,
- wobei das Assistenzsystem (48) mittels der vorgegebenen Strategien bezüglich des Energiegehalts, insbesondere des Rohaschegehalts und/oder des Trockenmassegehalts und/oder des Rohfasergehalts, des abgemähten Ernteguts (6) optimierte Arbeitsparameter für das landwirtschaftliche Fahrzeuggespann (1) zum Mähen des Futterernteguts (7) während des Futterernteprozesses generiert.

5. Landwirtschaftliches Fahrzeuggespann (1) nach einem der Ansprüche 1 bis 4,
**dadurch gekennzeichnet,**
- **dass** das Assistenzsystem (48) kommunizierend mit einer Sensorvorrichtung (9, 10, 11, 12, 13, 14) des landwirtschaftlichen Fahrzeuggespanns (1) verbunden ist, um sensorbasierte Daten in Form des Signals der Sensorvorrichtung (9, 10, 11, 12, 13, 14) zu empfangen, und/oder
- **dass** das Assistenzsystem (48) kommunizierend mit einem weiteren landwirtschaftlichen Fahrzeuggespann (50, 53, 54) des Futterernteprozesses verbunden ist, um die Futterernteprozessdaten zu empfangen.

6. Landwirtschaftliches Fahrzeuggespann (1) nach einem der Ansprüche 1 bis 5,
**dadurch gekennzeichnet,**
- **dass** das landwirtschaftliche Fahrzeuggespann (1), insbesondere der Traktor (2) und/oder die Mähwerkvorrichtung (3) und/oder die Querfördervorrichtung (20), eine Sensorvorrichtung (9, 12, 13) aufweist, die dazu vorgesehen und eingerichtet ist, als sensorbasierte Daten einen erntegutspezifischen Parameter bezüglich mittels der Mähwerkvorrichtung (3) abgemähten Ernteguts (6) zu detektieren, und/oder
- **dass** das landwirtschaftliche Fahrzeuggespann (1), insbesondere der Traktor (2) und/oder die Mähwerkvorrichtung (3) und/oder die Querfördervorrichtung (20), eine Sensorvorrichtung (10, 11, 14) zur Vorfelderkennung aufweist, die dazu vorgesehen und eingerichtet ist, als sensorbasierte Daten mindestens einen Parameter bezüglich des landwirtschaftlichen Feldes (8) und/oder einen erntegutspezifischen Parameter bezüglich des Futterernteguts (7), welches bezüglich einer Fahrtrichtung (FR) des Fahrzeuggespanns (1) vor dem Traktor (2) und/oder vor der Mähwerkvorrichtung (3) und/oder vor der Querfördervorrichtung (20) positioniert ist, zu detektieren, und/oder
- **dass** das landwirtschaftliche Fahrzeuggespann (1) wenigstens eine bezüglich des Traktors (2) und bezüglich der Mähwerkvorrichtung (3) und bezüglich der Querfördervorrichtung (20) separat ausgebildete Sensorvorrichtung (9, 10, 11, 12, 13, 14) aufweist.

7. Landwirtschaftliches Fahrzeuggespann (1) nach Anspruch 6,
**dadurch gekennzeichnet,**
- **dass** der erntegutspezifische Parameter eine Dichte des abgemähten Ernteguts (6) spezifiziert, und/oder
- **dass** der erntegutspezifische Parameter eine Höhe des abgemähten Ernteguts (6) spezifiziert, und/oder
- **dass** der erntegutspezifische Parameter eine Breite des abgemähten Ernteguts (6) spezifiziert, und/oder
- **dass** der erntegutspezifische Parameter eine Halmausrichtung des abgemähten Ernteguts (6) spezifiziert und/oder
- **dass** der erntegutspezifische Parameter den Energiegehalt, insbesondere einen Rohaschegehalt und/oder einen Trockenmassegehalt und/oder einen Rohfasergehalt, des abgemähten Ernteguts (6) spezifiziert, und/oder
- **dass** der erntegutspezifische Parameter sich auf Fremdkörper im abgemähten Erntegut (6) bezieht, und/oder
- **dass** der erntegutspezifische Parameter eine Masse und/oder eine Ertragsmenge des abgemähten Ernteguts (6) spezifiziert.

8. Landwirtschaftliches Fahrzeuggespann (1) nach einem der Ansprüche 1 bis 7,
**dadurch gekennzeichnet,**
- **dass** das landwirtschaftliche Fahrzeuggespann (1), insbesondere der Traktor (2) und/oder die Mähwerkvorrichtung (3), eine Sensorvorrichtung (9, 10, 11, 12, 13, 14) aufweist, die dazu vorgesehen und eingerichtet ist, als sensorbasierte Daten einen Auflagedruck der Mähwerkvorrichtung (3) auf einem Boden (17) des landwirtschaftlichen Feldes (8) zu ermitteln, und/oder
- **dass** das landwirtschaftliche Fahrzeuggespann (1), insbesondere der Traktor (2) und/oder die Mähwerkvorrichtung (3), eine Sensorvorrichtung (9, 10, 11, 12, 13, 14) aufweist, die dazu vorgesehen und eingerichtet ist, als sensorbasierte Daten einen Feuchtigkeitswert auf einem Boden (17) des landwirtschaftlichen Feldes (8) zu ermitteln, und/oder
- **dass** das landwirtschaftliche Fahrzeuggespann (1), insbesondere der Traktor (2) und/oder die Mähwerkvorrichtung (3), eine Sensorvorrichtung (9, 10, 11, 12, 13, 14) aufweist, die dazu vorgesehen und eingerichtet ist, als sensorbasierte Daten eine Schnitthöhe der Mähwerkvorrichtung (3) bezüglich eines Bodens (17) des landwirtschaftlichen Feldes (8) zu ermitteln.

9. Landwirtschaftliches Fahrzeuggespann (1) nach einem der Ansprüche 1 bis 7,
**dadurch gekennzeichnet,**
- **dass** die Einstellvorrichtung (15) ein digitales Abbild, insbesondere ein dreidimensionales Modelabbild, des zu bearbeitenden landwirtschaftlichen Feldes (8), insbesondere des Bodens (17), und/oder Wetterdaten und/oder Futtererntegutzustandsdaten in Form weiterer sensorbasierter Daten aufweist,
- wobei das digitale Abbild des zu bearbeitenden landwirtschaftlichen Feldes (8) Informationen, insbesondere Höheninformationen, bezüglich des Bodens (17) des zu bearbeitenden landwirtschaftlichen Feldes (8) aufweist,
- wobei die Einstellvorrichtung (15) dazu vorgesehen und eingerichtet ist, den Traktor (2) und die Mähwerkvorrichtung (3) und die Querfördervorrichtung (20) in Abhängigkeit sensorbasierter Daten des landwirtschaftlichen Fahrzeuggespanns (1) zum Mähen und Schwaden des Futterernteguts (7) und Futterernteprozessdaten eines weiteren landwirtschaftlichen Fahrzeuggespanns (50, 53, 54) des Futterernteprozesses und den weiteren sensorbasierten Daten einzustellen.

10. Landwirtschaftliches Fahrzeuggespann (1) nach einem der Ansprüche 1 bis 9,
**dadurch gekennzeichnet,**
- **dass** die Mähwerkvorrichtung (3) mittels einem Anbaurahmen (28) an einem Hubwerk, insbesondere einem fronseitigen Hubwerk (22) und/oder einem heckseitigen Hubwerk (23), des Traktors (2) ankoppelbar ausgebildet ist, und einen Tragrahmen (24) aufweist, an dem eine Mäheinheit (27) angreift, und/oder
- wobei der Tragrahmen (24) und der Anbaurahmen (28) einerseits über einen Schwenkrahmen (44) und anderseits über einen Lenker (43) unter Ausbildung einer trapezartigen Viergelenkkinematik derart miteinander gekoppelt sind, dass der Schwenkrahmen (44) über eine erste Schwenkachse (32) am Tragrahmen (24) und über eine zweite Schwenkachse (33) am Anbaurahmen (28) angreift, und dass der Lenker (43) über eine dritte Schwenkachse (34) am Tragrahmen (24) und über eine vierte Schwenkachse (35) am Anbaurahmen (28) angreift, und/oder
- wobei die Mähwerkvorrichtung (3) wenigstens einen Entlastungszylinder (38) aufweist, der im Mähbetrieb aktiv geschaltet ist, und einerseits am Anbaurahmen (28) und andererseits am Schwenkrahmen (44) gelenkig angreift, nämlich über ein Zylinderkolbengehäuse (37) am Anbaurahmen (28) und über einen Zylinderkolben (46) am Schwenkrahmen (44),
- wobei die Einstellvorrichtung (15) dazu vorgesehen und eingerichtet ist, den Entlastungszylinder (38) der Mähwerkvorrichtung (3) in Abhängigkeit der sensorbasierten Daten des landwirtschaftlichen Fahrzeuggespanns (1) zum Mähen des Futterernteguts (7) und/oder der Futterernteprozessdaten eines weiteren landwirtschaftlichen Fahrzeuggespanns (50, 53, 54) des Futterernteprozesses und/oder weiterer sensorbasierter Daten derart einzustellen, dass der Energiegehalt, insbesondere der Rohaschegehalt und/oder der Trockenmassegehalt und/oder der Rohfasergehalt, des abgemähten Ernteguts (6) für den Futterernteprozess optimiert wird.

11. Landwirtschaftliches Fahrzeuggespann (1) nach einem der Ansprüche 1 bis 10,
**dadurch gekennzeichnet,**
**dass** die Mähwerkvorrichtung (3) wenigstens eine als Trommelmähwerk und/oder als Scheibenmähwerk und/oder als Balkenmähwerk ausbildete Mäheinheit (27) aufweist.

12. Landwirtschaftliches Fahrzeuggespann (1) nach Anspruch 10 oder 11,
**dadurch gekennzeichnet,**
**dass** die Mäheinheit (27) der Mähwerkvorrichtung (3) als Scheibenmähwerk ausgebildet ist, wobei das Scheibenmähwerk mehrere Schneidorgane (19) zum Trennen von Futtererntegut (7) aufweist, wobei die Schneidorgane (19) bezüglich einer Querrichtung (QR), die quer zur Fahrtrichtung (FR) ausgerichtet ist, unter Ausbildung jeweils eines Mähbalkens (18) nebeneinander positioniert sind, wobei die Mähwerkvorrichtung (3) und der Traktor (2) derart ausgebildet sind, dass die Schneidorgane (19) über einen Antrieb, insbesondere einen elektrischen Antrieb und/oder einen Zapfwellenantrieb, des Traktors (2) antreibbar sind.

13. Landwirtschaftliches Fahrzeuggespann (1) nach einem der Ansprüche 2 bis 12,
**dadurch gekennzeichnet,**
- **dass** das Assistenzsystem (48) zur Optimierung des Energiegehalts, insbesondere des Rohaschegehalts und/oder des Trockenmassegehalts und/oder des Rohfasergehalts, des abgemähten Ernteguts (6) dazu vorgesehen und eingerichtet ist, während der Planung und/oder der Durchführung des Mähens und Schwadens des Futterernteguts (7) eine Feldeinteilung des landwirtschaftlichen Feldes (8) zu bestimmen und/oder zu nutzen, und/oder
- **dass** das Assistenzsystem (48) zur Optimierung des Energiegehalts, insbesondere des Rohaschegehalts und/oder des Trockenmassegehalts und/oder des Rohfasergehalts, des abgemähten Ernteguts (6) dazu vorgesehen und eingerichtet ist, während der Durchführung des Mähens und Schwadens des Futterernteguts (7) eine automatisierte Aushebung der Mähwerkvorrichtung (3) zu bewirken, und/oder
- **dass** das Assistenzsystem (48) dazu vorgesehen und eingerichtet ist, den Energiegehalt des abgemähten Ernteguts (6) zu maximieren, und/oder
- **dass** das Assistenzsystem (48) dazu vorgesehen und eingerichtet ist, den Rohaschegehalt des abgemähten Ernteguts (6) zu minimieren, und/oder
- **dass** das Assistenzsystem (48) dazu vorgesehen und eingerichtet ist, den Rohfasergehalt des abgemähten Ernteguts (6) zu minimieren, und/oder
- **dass** das Assistenzsystem (48) dazu vorgesehen und eingerichtet ist, einen Trockenmassegehalt des abgemähten Ernteguts (6) im Bereich bis zu 15% und/oder von 30% bis 45%, insbesondere 30% bis 40%, zu bewirken.
